# EUROPEAN PATENT APPLICATION

(11) **EP 3 670 139 A1**
(43) Date of publication of application: **24.06.2020**
(21) Application number: 19217293.0
(22) Date of filing: 18.12.2019
(51) Int. Cl.: B29C 48/30, B29C 48/49, B29C 48/21, B29C 48/305, B29D 30/60, B29C 48/07, B29C 48/25, B29D 30/52, B29D 30/62, B29K 105/00, B29L 30/00

(54) **METHOD FOR FORMING A COMPOSITE TREAD WITH MICROCHIMNEYS AND TIRE WITH A TREAD**

(30) Priority: 19.12.2018 US 201862781768 P; 08.10.2019 US 201916595814
(71) Applicant: The Goodyear Tire & Rubber Company, Akron, OH 44316 (US)
(72) Inventor: CHEN, Hongbing, Broadview Heights OH 44147 (US); DYRLUND, Christopher David, Canton OH 44705 (US); BALDAN, Adam Mark, Copley OH 44321 (US); ROGENSKI, Elizabeth Amelia, Atwater OH 44201 (US)
(74) Representative: Kutsch, Bernd

(57) **Abstract**

A method for forming a composite tread with microchimneys is disclosed. The method comprises: providing a coextruded strip (210) formed of a first compound and a second compound, wherein the first compound is a tread compound and the second compound is electrically conductive and different from the first compound, and then winding the coextruded strip (210) onto a tire building drum (18) to form a tread (300). Also, a tire having a tread (200) is disclosed, the tread (200) being formed from a spirally wound coextruded strip (210) of rubber compound, wherein the coextruded strip (210) of rubber compound is a dual layer of a first layer (210) of a first rubber compound and of a second layer (212) of a second rubber compound, and wherein the second rubber compound is electrically conductive and different from the first rubber compound.

## Description

### Field of the Invention

The invention relates in general to tire manufacturing, and more particularly to a method for forming a composite tread with microchimneys and to a tire with a tread.

### Background of the Invention

Tire manufacturers have progressed to more complicated designs due to an advance in technology as well as a highly competitive industrial environment. In particular, tire designers seek to use multiple rubber compounds in a tire tread in order to meet customer demands. Using multiple rubber compounds per tire component can result in a huge number of compounds needed to be on hand for the various tire lines of the manufacturer. In addition, modern tire tread design requires the use of a conductive rubber material in order to form a chimney in order to dissipate static electric charge. The tread with a chimney is typically made by extrusion, which increases the complexity of the splice bar design and die work. However, if there are any issues/inconsistencies with the extrusion, the conductive path can be broken and the tire will not properly dissipate the built up static charge.

Thus, it is desired to have an improved method and apparatus which provides independent flow of two or more compounds, including a conductive rubber material, from a single application head. More particularly, it is desired to be able to make a custom tire tread with conductive chimneys, directly onto a tire building machine in an efficient manner, reducing the need for multiple application stations. It is also desired to have a tire tread with multiple conductive chimneys, as opposed to a single chimney.

### Summary of the Invention

The invention relates to a method in accordance with claim 1 and to a tire in accordance with claim 13.

Dependent claims refer to preferred embodiments of the invention.

In accordance with a preferred aspect of the invention, a method for forming a composite tread with microchimneys is disclosed. The method comprises the steps of: providing a coextruded strip formed of a first and second rubber compound, wherein the first rubber compound is a tread rubber compound and the second rubber compound is relatively electrically conductive compared to the first rubber compound and different from the first rubber compound, and then winding the coextruded strip onto a tire building drum to form a tread.

In a preferred aspect of the invention, the electrical conductivity of the first compound is at least 10 times, more preferably at least 100 times lower than the electrical conductivity of the second compound.

Preferably, the microchimneys are pathways extending from the tread surface through the tread to allow an electrical discharge of the tread when the tread is used on a tire rolling on the road. The microchimneys are preferably only relatively thin pathways having a width preferably in a range of from 5 micrometer to 500 micrometer, more preferably 10 micrometer to 200 micrometer or 10 to 50 micrometer.

Preferably, the coextruded strip is spirally and continuously wound onto the tire building drum.

In a preferred aspect of the invention, both lateral edges of the tread are made 100% of the first compound.

In another preferred aspect of the invention, one of the lateral edges of the tread is formed 100% from the first compound and the other lateral edge is formed from 90% or 95% or in a range of from 85% to 98% of the first compound and 10% or 5% or in a range of from 85% to 98% of the second compound.

In a preferred aspect of the invention, the midsection of the tread or the tread at the midcircumferential plane of the tread when the tread is used on a tire is formed from a coextruded strip consisting of 90% or 95% or in a range of from 85% to 98% of the first compound and 10% or 5% or in a range of from 15% to 2 % of the second compound.

In a preferred aspect of the invention. the tread is formed from a single layer of coextruded strips.

In a preferred aspect of the invention, the coextruded strips have a first and second outer surface that are aligned with the radial direction of the tread when the coextruded strips come out of the nozzle and are applied on the tire building drum.

In another aspect of the invention, the tread is formed from a first and second layer of coextruded strips, wherein the coextruded strips are wound so that the second compound of the coextruded strips of the first layer are in contact with the second compound of the coextruded strips of the second layer.

In a preferred aspect of the invention, the coextruded strip is formed comprising the steps of: extruding the first compound through a first extruder and a first gear pump and into a first passageway of a coextrusion nozzle; and extruding the second compound through a second extruder and a second gear pump and into a second passageway of the coextrusion nozzle. Preferably, the first and second passageways are joined together immediately upstream of the die outlet of the coextrusion nozzle.

In a preferred aspect of the invention, the coextrusion nozzle has a preferably removable insert which divides the nozzle into a separate first and second passageway.

In a preferred aspect of the invention, the insert has a distal end positioned adjacent to the die exit of the coextrusion nozzle, the distal end preferably having an elongated flat portion or nose.

In a preferred aspect of the invention, a coextrusion zone is formed between the nose and the die outlet, in which the first rubber compound, i.e. the first extruded layer, and the second rubber compound, i.e. the second extruded layer, are joined to form, after passing the die exit, the coextruded strip.

In a preferred aspect of the invention, the ratio of the volume of the first compound to the second compound in the coextruded strip is varied by changing the ratio of the speed of the first gear pump to the second gear pump.

In a preferred aspect of the invention, the coextruded strip comprises discrete layers of the first compound and the second compound respectively. Preferably, the layer formed by the second compound is significantly thinner than the layer formed by the first compound such as 3-50 times or 5 to 20 times thinner. In a preferred aspect of the invention, the thickness of the layer formed by the second compound is in a range of from 5 micrometer to 500 micrometer, more preferably 10 micrometer to 200 micrometer or 10 to 50 micrometer.

In a preferred aspect of the invention, a tread for a tire is formed from a spirally wound coextruded strip of rubber compound, wherein the coextruded strip of rubber compound is a dual layer of a first layer of a first rubber compound and of a second layer of a second rubber compound, and wherein the second rubber compound is electrically relatively conductive and different from the first rubber compound.

Preferably, the coextruded strip is a continuous strip or formed in a continuous manner. Preferably, the coextruded strip has a rectangular or trapezoidal cross-sectional shape.

In a preferred aspect of the invention, the insert has a rectangular cross-sectional shape.

In a preferred aspect of the invention, the ratio of the first gear pump to the second gear pump is varied during operation of the system.

Preferably, the coextruded strip is applied in a continuous manner to a tire building machine to build a tire component.

### Definitions

"Axial" and "axially" means the lines or directions that are parallel to the axis of rotation of the tire.

"Circumferential" means lines or directions extending along the perimeter of the surface of the annular tread perpendicular to the axial direction.

"Radial" and "radially" mean directions radially toward or away from the axis of rotation of the tire.

"Laminate structure" means an unvulcanized structure made of one or more layers of tire or elastomer components such as the innerliner, sidewalls, and optional ply layer.

### Brief Description of the Drawings

The invention will be described by way of example and with reference to the accompanying drawings in which:
FIG. 1 is a cross-sectional view of a tire tread with microchimneys of the present invention;
FIG. 2A is a perspective view of a coextruded strip of 90% of a first compound and 10% of a second compound of the present invention;
FIG. 2B is a perspective view of a coextruded strip of 95% of a first compound and 5% of a second compound;
FIG. 3 is a close up cross-sectional view of the tire tread of FIG. 1, formed with microchimneys;
FIG. 4 is a cross-sectional view of a green (uncured) tread formed from a single layer of spirally wound coextruded strips wherein the outer surfaces of each strip are oriented in the radial direction;
FIG. 5 is a close up cross-sectional view of a dual compound apparatus for forming a coextruded strip onto a tire building drum; and

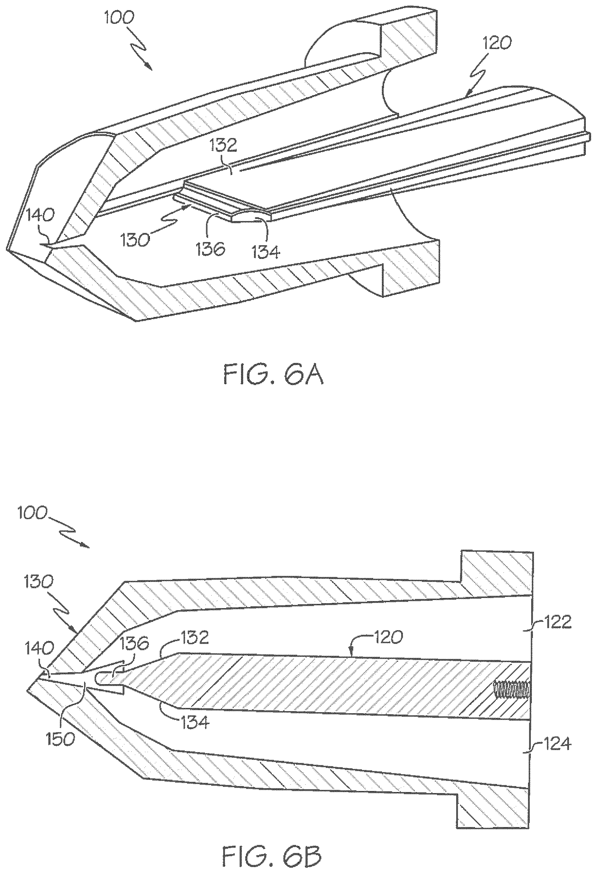

FIG. 6A is a perspective cutaway view of a coextrusion nozzle of the present invention, while
FIG. 6B is a side cross-sectional view of the coextrusion nozzle of FIG. 6A.

### Detailed Description of Example Embodiments of the Invention

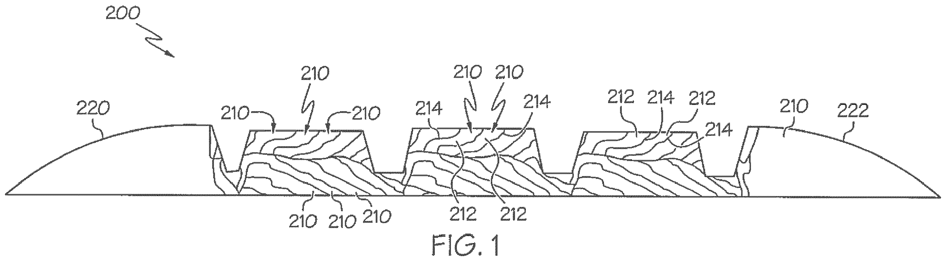

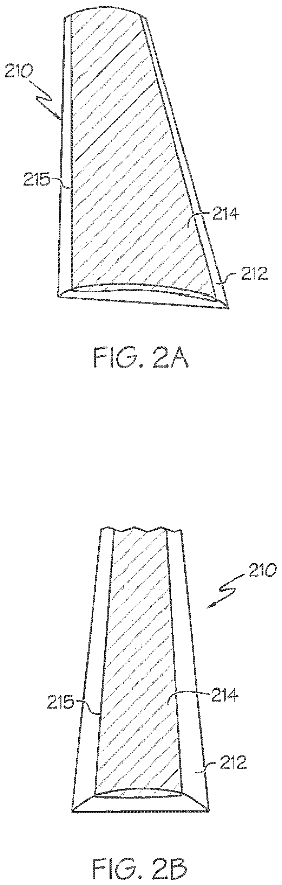

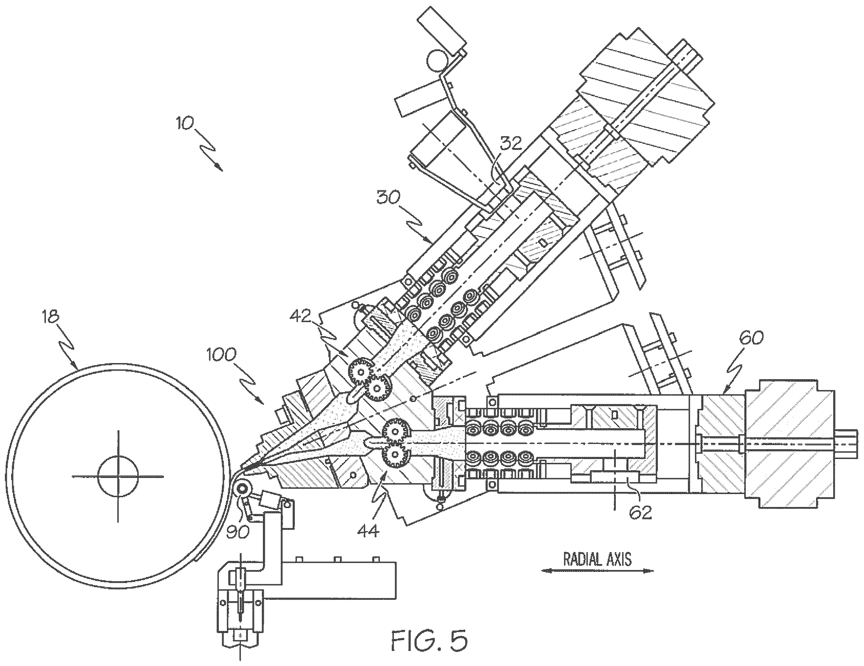

FIG. 1 illustrates a cross-sectional view of a post cure tire tread 200 of the present invention. The tire tread 200 is formed by winding a continuous coextruded strip 210 of green rubber onto a tire building drum 18 or a shaped green carcass. The continuous strip 210 is shown in FIG. 2A and is a dual layer or coextruded strip of a first layer 212 and second layer 214 of two different rubber tread compounds. The first layer 212 is formed from a first rubber compound which can be any mono cap tread compound, typically a full silica and electrically relatively nonconductive rubber compound (compared to the second layer 214). The second layer 214 is formed from a second compound that is an electrically conductive rubber compound (compared to the second layer 214). The first and second rubber layers 212, 214 are formed in discrete layers, and thus are not mixed together. The second layer 214 is preferably thinner than the first layer 212. The coextruded strip shown in FIG. 2A has a ratio of 90% of the first compound to 10% of the second compound, while FIG. 2B illustrates a coextruded strip having a ratio of 95% of the first compound to 5% of the second compound. The coextruded strip has a first outer surface and a second outer surface, and an interface where the first and second compounds are joined together. The orientation of these surfaces may be varied. The apparatus used to form the continuous coextruded strip is described in the paragraphs below and is shown in FIG. 5. The apparatus can form the coextruded strip while instantaneously varying the ratio of the first compound to the second compound.

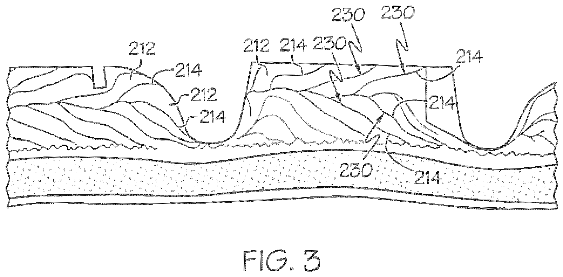

The coextruded strip forming apparatus 10 is used to form the tread shown in FIG. 1 by rotating the drum 18 (or carcass) and then applying a continuous coextruded strip by spirally winding the strip onto the drum 18 or carcass. As shown in FIGS. 1 and 3, the strips are layered in the first row by overlapping the coextruded strip windings with each other. At the lateral ends, 220, 222 the strip is preferably 100% of the first compound, which means there are no microchimneys formed in this tread zone. Between the lateral ends 220, 222 the strip composition is preferably in the range of 80-90% first compound, and 10-20% of an electrically conductive tread compound. There are typically two rows of strips stacked on top of each other to form the tread. The strips are arranged so that each of the electrically conductive layers 214 of the coextruded strip are in contact with an adjacent electrically conductive layer of an adjacent coextruded strip to form an electrically conductive pathway 230. FIG. 3 illustrates one example of how the coextruded strips are arranged to create an electrically conductive pathway 230.

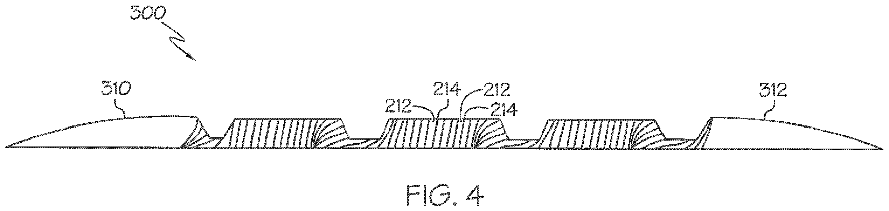

FIG. 4 illustrates a second embodiment of a green tire tread 300 formed from a single layer of coextruded strips. The outer lateral edges 310, 312 are formed of 100% of the black compound, while the midportion between the lateral edges are coextruded strips of a first layer 212 and an electrically conductive second layer 214, wherein the first layer 212 is formed of 95% of a first compound while the second layer is formed with 5% of an electrically conductive compound. The strips are stacked vertically so that the outer surfaces or interface of the strips are oriented in the radial direction. The first compound can be selected to be any mono cap tread compound, typically full silica and nonconductive rubber. The second compound could preferably be an electrically conductive rubber compound, or a rubber compound selected for wear, cornering stiffness or wet grip. The advantage to this tire tread is that there is no change of tire properties with wear.

### Coextruded Strip Forming Apparatus

As shown in FIG. 5, the coextruded strip forming apparatus 10 includes a first extruder 30 and a second extruder 60, preferably arranged side by side in close proximity. The first extruder 30 has an inlet 32 for receiving a first rubber composition A, while the second extruder 60 has an inlet 62 for receiving a second rubber composition B. Each extruder functions to warm up the rubber composition to the temperature in the range of from 80°C to 150°C, preferably 90°C to 120°C, and to masticate the rubber composition as needed. The coextruded strip forming apparatus 10 is mounted upon a translatable support bar 16, that can translate fore and aft in relation to a tire building machine 18.

The first compound A is extruded by the first extruder 30 and then pumped by the first gear pump 42 into a nozzle 100, while at the same time the second compound B is extruded by the second extruder 60 and then pumped by the second gear pump 44 into the coextrusion nozzle 100.

The coextrusion nozzle 100 has a removable insert 120 that functions to divide the nozzle into a first and second flow passageway 122, 124. The removable insert 120 is preferably rectangular in cross-sectional shape. The removable insert 120 has a distal end 130 with tapered ends 132,134 forming a nose 136. The nose 136 is positioned adjacent the nozzle die exit 140 and spaced only a few millimeters from the die exit 140. The region between the nose 136 and the die exit 140 is a low volume coextrusion zone 150 that is high pressure. In the low volume coextrusion zone 150, compound A flowstream 122 merges with compound B flowstream 124 forming two discrete layers 212,214 joined together at an interface 215.

The volume ratio of compound A to compound B may be changed by varying the ratio of the speed of gear pump of compound A to the speed of gear pump of compound B. The dual coextruded strip forming apparatus 10 can adjust the speed ratios on the fly, and due to the small residence time of the coextrusion nozzle, the apparatus has a fast response to a change in the compound ratios. This is due to the low volume of the coextrusion zone.

The tread having a plurality of microchimneys as described herein is beneficial for cycle time since it replaces the job of two single gear pumps with one, and eliminates the sequence starts/stops that are required when switching from one gear pump to the other. The microchimney design is also a more robust solution because it provides multiple conductive paths throughout the tread as opposed to a single path, resolving issues with conventional chimney designs as a result of issues/inconsistencies with the extrusion, the conduction path can be broken and the tire will not properly dissipate the built up static charge. This concept also eliminates the complexity of splice bar design and die work. The microchimney layout can easily be modified with programming changes.

## Claims

1. A method for forming a composite tread with microchimneys, the method comprising the steps of:
providing a coextruded strip (210) formed of a first and second compound, wherein the first compound is a tread compound and the second compound is electrically conductive and different from the first compound, and then
winding the coextruded strip (210) onto a tire building drum (18) to form a tread (300).

2. The method of claim 1 wherein the coextruded strip (210) is spirally and/or continuously wound onto the tire building drum (18).

3. The method of claim 1 or 2 wherein the lateral edges (310, 312) of the tread (300) are 100% of the first compound, or wherein one of the lateral edges (310, 312) of the tread (300) is formed from the first compound and the other lateral edge is formed from 90% or in a range of from 85% to 98% of the first compound and 10% or in a range of from 85% to 98% of the second compound.

4. The method of at least one of the previous claims wherein the midsection of the tread (300) or the tread (300) at the midcircumferential plane of the tread (300) is formed from a coextruded strip consisting of 90% or in a range of from 85% to 98% of the first compound and 10% or in a range of from 15% to 2 % of the second compound.

5. The method of at least one of the previous claims wherein the tread (300) is formed from a single layer of coextruded strips (210).

6. The method of at least one of the previous claims wherein the coextruded strips (210) have a first and second outer surface that are aligned with the radial direction of the tread (300).

7. The method of at least one of the previous claims wherein the tread (300) is formed from a first and second layer of coextruded strips (212, 214), wherein the coextruded strips (210) are wound so that the second compound of the coextruded strips of the first layer (212) are in contact with the second compound of the coextruded strips of the second layer (214).

8. The method of at least one of the previous claims wherein the coextruded strip (210) is formed comprising the steps of:
extruding the first compound through a first extruder (30) and a first gear pump (42) and into a first passageway (122) of a coextrusion nozzle (150);
extruding the second compound through a second extruder (60) and a second gear pump (44) and into a second passageway (124) of the coextrusion nozzle (150); and
wherein the first and second passageways (122, 124) are joined together immediately upstream of the die outlet (140) of the coextrusion nozzle (150).

9. The method of claim 8 wherein the coextrusion nozzle (150) has a preferably removable insert (120) which divides the nozzle (150) into a separate first and second passageway (122, 124).

10. The method of claim 9 wherein the insert (120) has a distal end (150) positioned adjacent to the die outlet (140) of the coextrusion nozzle (150), the distal end (150) preferably having an elongated flat portion or nose (136).

11. The method of at least one of the previous claims wherein the ratio of the volume of the first compound to the second compound in the coextruded strip (210) is varied by changing the ratio of the speed of the first gear pump (42) to the second gear pump (44).

12. The method of at least one of the previous claims wherein the coextruded strip (210) comprises discrete layers (212, 214) of the first compound and the second compound respectively.

13. A tire having a tread, wherein the tread (200) is formed from a spirally wound coextruded strip (210) of rubber compound, wherein the coextruded strip (210) of rubber compound is a dual layer of a first layer (210) of a first rubber compound and of a second layer (212) of a second rubber compound, and wherein the second rubber compound is electrically conductive and different from the first rubber compound.

14. The tire of claim 13 wherein the coextruded strip (210) is a continuous strip and/or a strip having a rectangular or trapezoidal cross-sectional shape.

15. The tire of claim 13 or 14 wherein the lateral edges (220, 222) of the tread (200) are 100% of the first rubber compound, and/or wherein the midsection of the tread (200) or the tread (200) at the midcircumferential plane of the tire is formed from the coextruded strip (210) consisting of 90% or in a range of from 85% to 98% of the first rubber compound and 10% or in a range of from 15% to 2 % of the second rubber compound.
